# EUROPEAN PATENT APPLICATION

(11) **EP 4 186 398 A1**
(43) Date of publication of application: **31.05.2023**
(21) Application number: 22208345.3
(22) Date of filing: 18.11.2022
(51) Int. Cl.: A47J 43/046, A47J 43/07

(54) **CONTAINER DETECTION SYSTEM FOR A COUNTERTOP APPLIANCE**

(30) Priority: 23.11.2021 US 202163282254 P; 11.11.2022 US 202217985524
(71) Applicant: Whirlpool Corporation, Benton Harbor, MI 49022 (US)
(72) Inventor: Bradley, Samuel James, 21024 Cassinetta di Biandronno (VA) (IT); Everidge, Jacob Warren, 21024 Cassinetta di Biandronno (VA) (IT); Rutter, Ryan James, 21024 Cassinetta di Biandronno (VA) (IT); Haney, Edward James, 21024 Cassinetta di Biandronno (VA) (IT)
(74) Representative: Spina, Alessandro

(57) **Abstract**

A countertop appliance (10) comprises interchangeable containers (12) including a first container (14) and a second container (16) each having a base (18). The first container (14) includes a first magnet (20) coupled to the base (18) of the first container (14) at a first distance (Di) and the second container (16) includes a second magnet (22) coupled to the base (18) of the second container (16) at a second distance (D₂). A housing (24) includes a motor (26) and an attachment portion (28). The interchangeable containers (12) are selectively and operably coupled to the attachment portion (28) of the housing (24). An analog magnetic sensor (30) is disposed proximate the attachment portion (28) of the housing (24). The analog magnetic sensor (30) is configured to detect the first magnet (20) at the first distance (Di) and the second magnet (22) at the second distance (D₂). A controller (32) communicatively coupled with the analog magnetic sensor (30) is configured to identify one of the interchangeable containers (12) based on the detected distance of one of the first magnet (20) and the second magnet (22).

## Description

### BACKGROUND OF THE DISCLOSURE

The present disclosure generally relates to a countertop appliance, and more specifically, to a container detection system for a countertop appliance.

### SUMMARY OF THE DISCLOSURE

According to one aspect of the present disclosure, a countertop appliance comprises interchangeable containers including a first container and a second container each having a base. The first container includes a first magnet coupled to the base of the first container at a first distance and the second container includes a second magnet coupled to the base of the second container at a second distance. A housing includes a motor and an attachment portion. The interchangeable containers are selectively and operably coupled to the attachment portion of the housing. An analog magnetic sensor is disposed proximate the attachment portion of the housing. The analog magnetic sensor is configured to detect the first magnet at the first distance and the second magnet at the second distance. A controller is communicatively coupled with the analog magnetic sensor. The controller is configured to identify one of the interchangeable containers based on the detected distance of one of the first magnet and the second magnet.

According to another aspect of the present disclosure, a countertop appliance includes interchangeable containers including a first container and a second container each including a lid and a body that defines a channel. An activation rod is disposed within the channel and includes a magnet. The activation rod is translated via the lid of the interchangeable containers. An analog magnetic sensor is disposed proximate the magnet of the activation rod. The analog magnetic sensor is configured to detect a distance of the magnet relative to the analog magnetic sensor. A controller is communicatively coupled with the analog magnetic sensor. The controller is configured to identify when the lid is in a closed position based on the distance of the magnet detected by the analog magnetic sensor.

According to still another aspect of the present disclosure, a countertop appliance includes interchangeable containers including a first container and a second container each having a base. The first container includes a first magnet coupled to the base of the first container at a first distance and the second container includes a second magnet coupled to the base of the second container at a second distance. A housing includes a motor and an attachment portion. The interchangeable containers are selectively and operably coupled to the attachment portion of the housing. An analog magnetic sensor is disposed proximate the attachment portion of the housing and is configured to detect a polarity of the first magnet at the first distance and a polarity of the second magnet at the second distance. A controller is communicatively coupled with the analog magnetic sensor configured to identify one of the interchangeable containers based on the detected polarity and the detected distance of one of the first magnet and the second magnet.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a top perspective view of a countertop appliance of the present disclosure;
FIG. 2 is a bottom perspective view of interchangeable containers of the present disclosure with a first container and a second container including a first magnet and a second magnet, respectively;
FIG. 3 is a bottom perspective view of interchangeable containers of the present disclosure and a top perspective view of a base of a countertop appliance of the present disclosure;
FIG. 4 is an enlarged partial cross-sectional view of a countertop appliance of the present disclosure with a first magnet and an analog magnetic sensor;
FIG. 5 is an enlarged partial cross-sectional view of a countertop appliance of the present disclosure with a second magnet and an analog magnetic sensor;
FIG. 6 is a side cross-sectional view of a countertop appliance with an interchangeable container in an open position according to one aspect of the present disclosure;
FIG. 7 is a side cross-sectional view of a countertop appliance with an interchangeable container in a closed position according to one aspect of the present disclosure;
FIG. 8 is a schematic block diagram of a container detection system according to one aspect of the present disclosure;
FIG. 9 is a side perspective view of a countertop appliance of the present disclosure in communication with a wireless communication interface and a remote user device;
FIG. 10 is an enlarged partial bottom perspective view of the first magnet of the first container taken at area VIII of FIG. 2 and depicting a South polarity of the first magnet; and
FIG. 11 is an enlarged partial bottom perspective view of the second magnet of the second container taken at area IX of FIG. 2 and depicting a North polarity.

The components in the figures are not necessarily to scale, emphasis instead being placed upon illustrating the principles described herein.

### DETAILED DESCRIPTION

The present illustrated embodiments reside primarily in combinations of method steps and apparatus components related to a container detection system for a countertop appliance. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

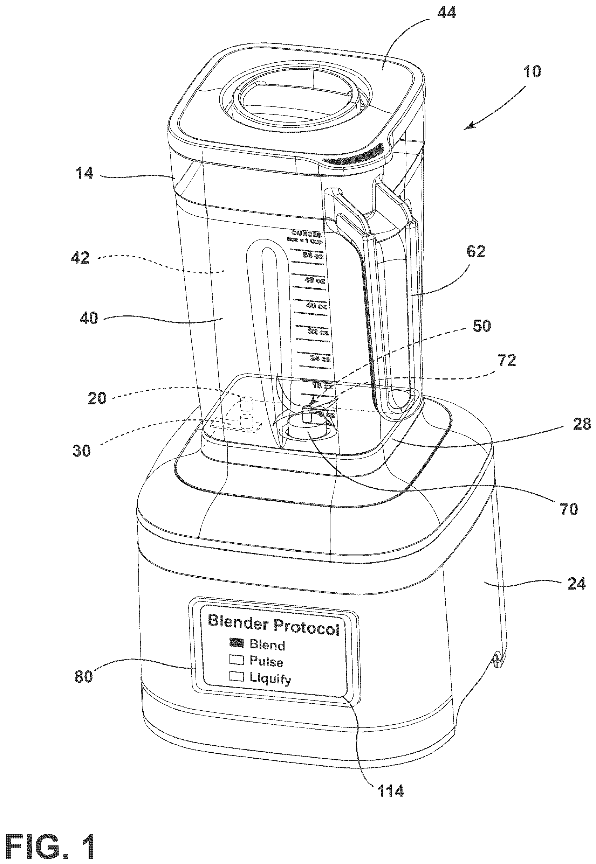

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a . . . " does not, without more constraints, preclude the existence of additional identical elements in the process, method, article, or apparatus that comprises the element.

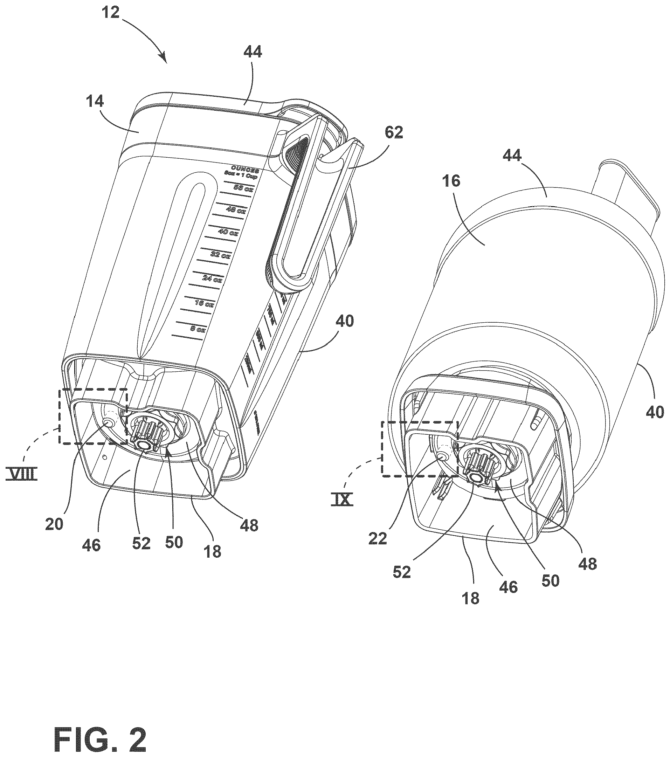

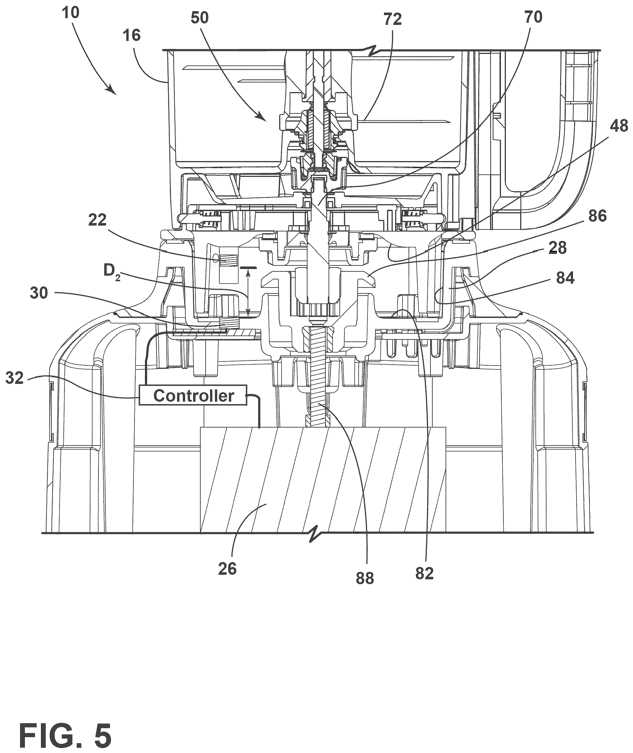

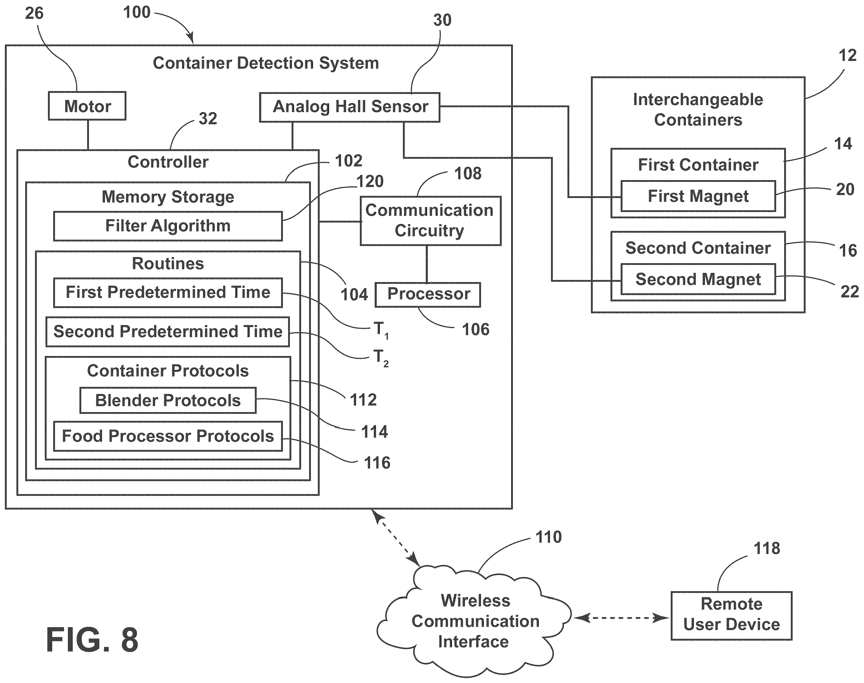

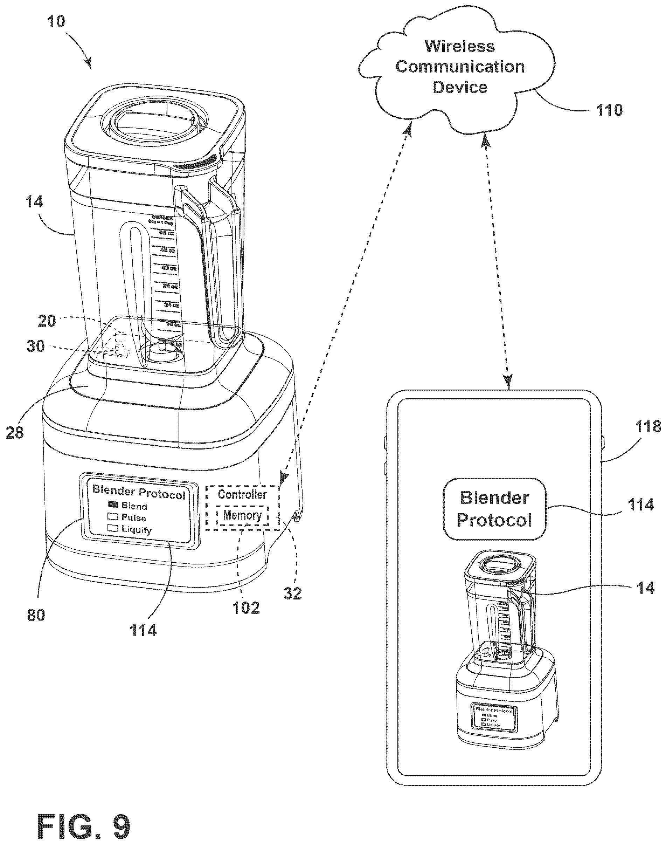

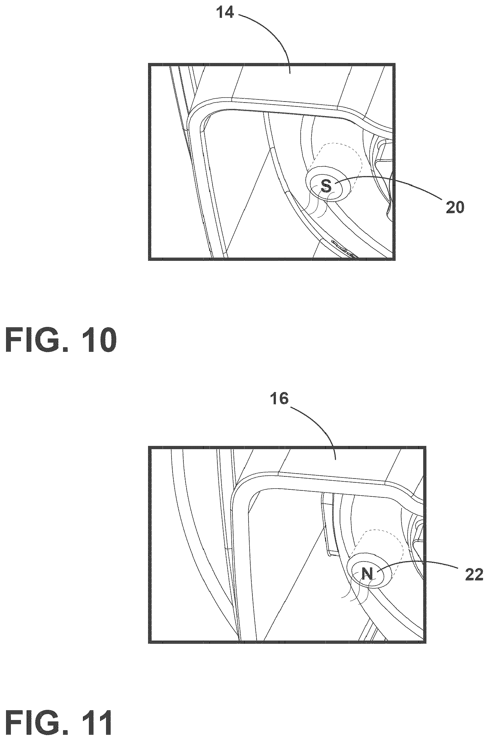

Referring to FIGS. 1-11, reference numeral 10 generally designates a countertop appliance including interchangeable containers 12. The interchangeable containers 12 include a first container 14 and a second container 16 that each have a base 18. The first container 14 includes a first magnet 20 coupled to the base 18 of the first container 14 at a first distance D₁. The second container 16 includes a second magnet 22 coupled to the base 18 of the second container 16 at a second distance D₂. A housing 24 includes a motor 26 and an attachment portion 28. The interchangeable containers 12 are selectively and operably coupled to the attachment portion 28 of the housing 24. An analog magnetic sensor 30 is disposed proximate the attachment portion 28 of the housing 24 and is configured to detect the first magnet 20 at the first distance D₁ and the second magnet 22 at the second distance D₂. A controller 32 is communicatively coupled with the analog magnetic sensor 30. The controller 32 is configured to identify one of the first container 14 and the second container 16 based on the respective detected distances D₁, D₂ of one of the first magnet 20 and the second magnet 22.

Referring to FIGS. 1-7, the countertop appliance 10 is illustrated with the interchangeable containers 12, which include the first container 14 and the second container 16. Additionally or alternatively, the interchangeable containers 12 may include more than two containers, such that each container of the interchangeable containers 12 includes the base 18 and can be coupled to the housing 24. By way of example, not limitation, the first container 14 can be a blender jar, and the second container 16 can be a food processor jar. The interchangeable containers 12 each includes a body 40 that defines a cavity 42 in which food items may be disposed. A lid 44 is selectively and/or hingedly coupled to the body 40 of each of the interchangeable containers 12 to provide selective access to the cavity 42. The base 18 of the interchangeable containers 12 extends from the body 40 and includes sidewalls 46 and an upper portion 48 through which a blade assembly 50 can partially extend.

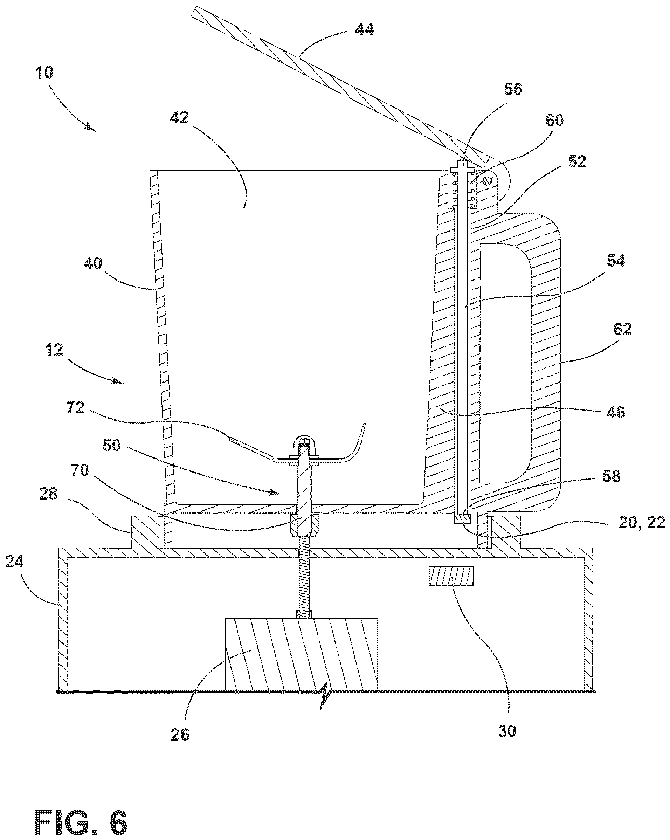

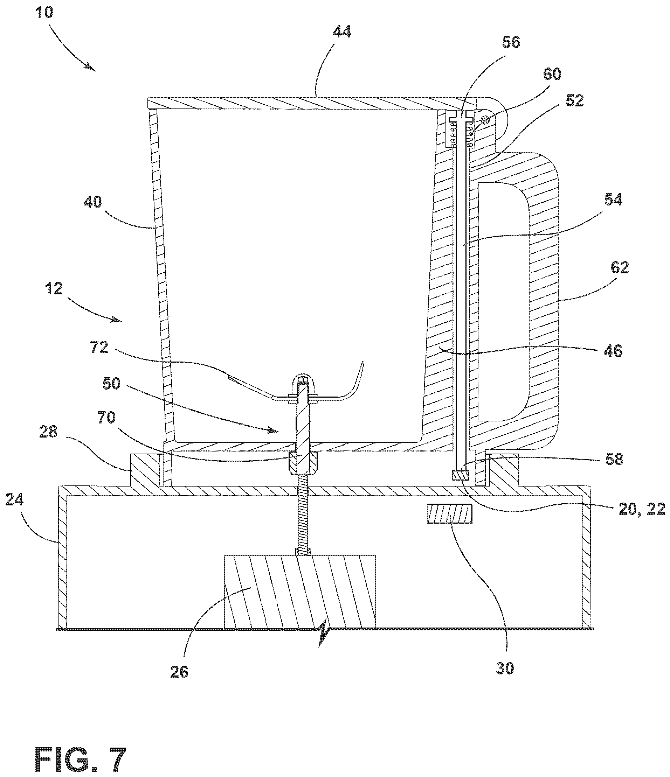

In one configuration illustrated in FIGS. 6 and 7, the sidewalls 46 of the body 40 define a channel 52 in which an activation rod 54 is disposed. The rod 54 includes an engagement end 56 and an activation end 58, which includes the first and/or second magnet 20, 22. A biasing member 60 is disposed around the engagement end 56 and is configured to bias the activation rod 54 between an engaged position and a disengaged position. The activation rod 54 is illustrated as being proximate to a handle 62 of the containers 12. Additionally or alternatively, the activation rod 54 may be positioned in any practicable location of the containers 12.

The activation rod 54 can include either of the first and/or second magnets 20, 22 and is configured to translate the respective magnet 20, 22 toward the analog magnetic sensor 30 when the lid 44 is closed. The magnets 20, 22, along with the activation rod 54, can communicate with the analog magnetic sensor 30 when the lid 44 is in closed or open positions. The communication detected by the analog magnetic sensor 30 is based on the detected distance of the respective magnet 20, 22 relative to the analog magnetic sensor 30, as described below.

With further reference to FIGS. 1-7, the blade assembly 50 of the interchangeable containers 12 includes a blade driveshaft 70 and blade attachments 72 that may be permanently coupled to the blade driveshaft 70 and/or removably coupled to the blade driveshaft 70. For example, the blade attachment 72 of the first container 14 may be fixedly coupled to the blade driveshaft 70, such that the blade assembly 50 is a single unitary construction. Additionally or alternatively, the blade attachments 72 of the second container 16 may be removably coupled to the blade driveshaft 70 and may include multiple variations of blade attachments 72. The blade driveshaft 70 extends through the upper portion 48 of the base 18 to operably couple each of the interchangeable containers 12 with the housing 24.

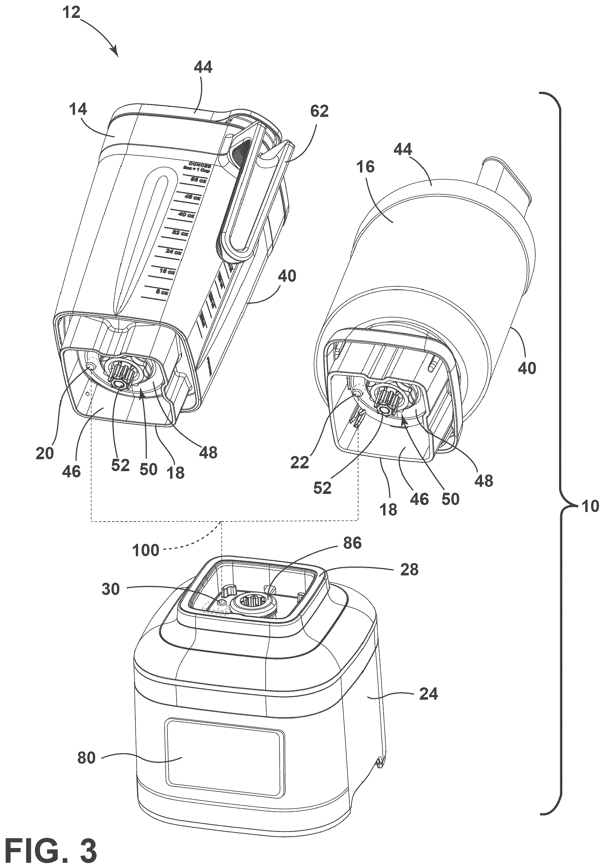

Referring still to FIGS. 1-7, each of the first and second magnets 20, 22 can be coupled to the upper portion 48 of the base 18 of the interchangeable containers 12. For example, it is generally contemplated that the first magnet 20 is coupled to the upper portion 48 of the base 18 of the first container 14, as illustrated in FIG. 3. Positioning of the first magnet 20 on the upper portion 48 defines the first distance D₁ relative to the housing 24. Stated differently, the first distance D₁ is defined between the first magnet 20 and the analog magnetic sensor 30, as described in more detail below. The second distance D₂ of the second magnet 22 is defined between the second magnet 22 and the analog magnetic sensor 30. It is generally contemplated that the analog magnetic sensor 30 may be a Hall effect sensor. Additionally or alternatively, the analog magnetic sensor 30 may be any sensor practicable for detecting the first and second magnets 20, 22. The second magnet 22 may also be coupled to the upper portion 48 of the base 18 on the second container 16. The second distance D₂ may be greater than the first distance D₁, such that the second magnet 22 is positioned further from the housing 24. The positioning of the first and second magnets 20, 22 is described in more detail below.

Referring to FIGS. 3-5, the housing 24 of the countertop appliance 10 may be referred to as a common motor base, such that the housing 24 is configured to receive and is common to both the first container 14 and the second container 16. Stated differently, the housing 24 is configured to receive any one of the interchangeable containers 12 via the attachment portion 28. The housing 24 includes a user interface 80 and the analog magnetic sensor 30 that is operably coupled to the attachment portion 28 of the housing 24. The attachment portion 28 includes a receiving surface 82 defined by peripheral walls 84 and a coupling feature 86. The housing 24 also includes the motor 26 and a motor driveshaft 88. The motor driveshaft 88 is operably coupled to the coupling feature 86 and selectively and operably coupled to the blade driveshaft 70 of the interchangeable containers 12.

It is generally contemplated that the analog magnetic sensor 30 is disposed within the attachment portion 28 proximate to the motor driveshaft 88 and peripheral walls 84 to detect the interchangeable containers 12 positioned on the housing 24. The attachment portion 28 of the housing 24 is configured to receive each of the first and second containers 14, 16, such that the attachment portion 28 is configured as a universal attachment portion 28, as mentioned above. The motor driveshaft 88 extends from the motor 26 through the receiving surface 82 of the attachment portion 28 and is configured to operably couple to the blade assembly 50 of each of the interchangeable containers 12. Stated differently, the blade driveshaft 70 of the interchangeable containers 12 is operably coupled to the motor driveshaft 88 via the coupling feature 86 of the housing 24 to operate the blade assembly 50.

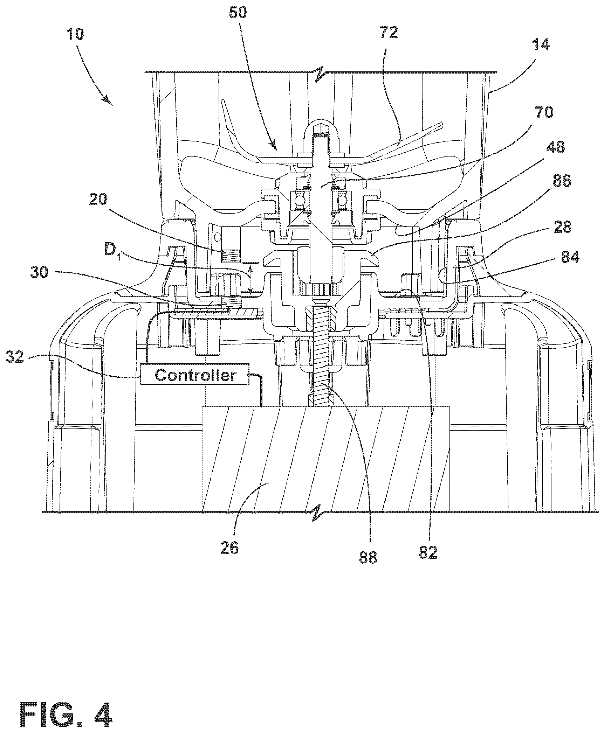

With reference to FIGS. 4-8, it is contemplated that the motor 26 is operably and communicatively coupled with the controller 32. The housing 24 includes the user interface 80 (FIG. 3), which is also communicatively coupled with the controller 32. It is generally contemplated that the controller 32 is part of a container detection system 100, described further below, that also includes the analog magnetic sensor 30. The controller 32 of the container detection system 100 includes a memory storage 102 that can be configured with routines 104. The controller 32 may also be configured with a processor 106 and/or other control circuitry. The processor 106 is configured to execute the routines 104 stored in the memory storage 102 based on the data and/or communications received by the controller 32.

The control circuitry of the controller 32 may include communication circuitry 108 for bidirectional communication. For example, the controller 32 may be communicatively coupled with a wireless communication interface 110 via the communication circuitry 108. While the memory storage 102 can be included within the controller 32, cloud storage, or other remotely accessible memory interfaces can also be used instead of or in combination with the memory storage 102. It is also contemplated that the controller 32 may be on board the countertop appliance 10.

The wireless communication interface 110 may be implemented via one or more direct or indirect nonhierarchical communication protocols, including but not limited to, Bluetooth^{®}, Bluetooth^{®} low energy (BLE), Thread, Ultra-Wideband, Z-wave, ZigBee^{®}, etc. Additionally, the wireless communication interface 110 may correspond to a centralized or hierarchal wireless communication interface 110 where one or more of the devices communicate via the wireless router (e.g., a communication routing controller). Accordingly, the wireless communication interface 110 may be implemented by a variety of communication protocols, including, but not limited to, global system for mobile communication (GSM), general packet radio services, code division multiple access, enhanced data GSM environment, fourth-generation (4G) wireless, fifth-generation (5G) wireless, Wi-Fi, world interoperability for wired microwave access (WiMAX), local area network, Ethernet, etc. By flexibly implementing the wireless communication interface 110, the various devices and servers may be in communication with one another directly via the wireless communication interface 110 or a cellular data connection.

The controller 32 disclosed herein may include various types of control circuitry, digital or analog, and may include a processor, a microcontroller, an application specific integrated circuit (ASIC), or other circuitry configured to perform the various inputs or outputs, control, analysis, or other functions described herein. The memory storage 102 described herein may be implemented in a variety of volatile and nonvolatile memory formats. Routines 104 may include operating instructions to enable the various methods described herein.

With further reference to FIGS. 4-8, the routines 104 of the memory storage 102 may include container protocols 90 which correspond to the functional operation of the countertop appliance 10 and depend on the interchangeable containers 12 detected by the container detection system 100. The controller 32 is configured to display the container protocols 90 on the user interface 80 (FIG. 3) based on a signal received from the analog magnetic sensor 30. The container protocols 90 can include a blender protocol 114 associated with the first container 14 and a food processor protocol 116 associated with the second container 16. It is generally contemplated that the respective container protocol 112 may be displayed on a remote user device 118 to allow the user to operate the countertop appliance 10 from the remote user device 118.

The controller 32 is also configured with a filter algorithm 120 that detects the magnets 20, 22 repeatedly to detect the respective container 14, 16. For example, the filter algorithm 120 is triggered once the analog magnetic sensor 30 detects the presence of the magnet 20, 22, and the filter algorithm 120 is configured to repeatedly read the distance of the magnet 20, 22 relative to the analog magnetic sensor 30. Stated differently, the filter algorithm 120 reads the distance of the magnets 20, 22 multiple times over a first predetermined period of time T₁, is idle for a second predetermined period of time T₂, and then repeatedly reads the distance of the magnets 20, 22 a second time. The controller 32 can compare the detected distances of the magnets 20, 22 to determine whether the respective container 14, 16 has remained stationary. The filter algorithm 120 assists the controller 32 in detecting when the container 14, 16 is stationary on the housing 24.

With further reference to FIGS. 4-8, the controller 32 may be communicatively coupled with the remote user device 118 via the wireless communication interface 110 to execute selected protocols of the container protocol 112 that may be displayed. As described further below, the controller 32 receives the signal from the analog magnetic sensor 30 to indicate which of the container protocols 90 to activate. The analog magnetic sensor 30 is configured to measure the magnetic field of, at least, the first magnet 20 and the second magnet 22. For example, the signal received by the analog magnetic sensor 30 can be stronger when the first and/or second magnets 20, 22 are positioned directly over the analog magnetic sensor 30. It is also contemplated that the distance between the first magnet 20 or the second magnet 22 and the analog magnetic sensor 30 may affect the signal detected by the analog magnetic sensor 30. Stated differently, the analog magnetic sensor 30 can detect the different distances D₁, D₂ to identify the respective interchangeable container 12.

As illustrated in FIGS. 6 and 7, the interchangeable containers 12 may include the activation rod 54 described above to identify the respective container 12 disposed on the housing 24. The analog magnetic sensor 30 may also detect when the lid 44 of the interchangeable containers 12 is closed, such that the motor 26 may remain inactive until the analog magnetic sensor 30 detects the respective magnet 20, 22. The engagement end 56 of the activation rod 54 remains extended above the sidewalls 46 of the interchangeable containers 12 when the lid 44 is in the open position. The blade assembly 50 can remain inactive, despite the analog magnetic sensor 30 detecting the respective magnet 20, 22, when the lid 44 is in the open position.

Once the lid 44 is closed, the activation rod 54 is biased toward the analog magnetic sensor 30. The analog magnetic sensor 30 can detect the change in position of the respective magnet 20, 22, and the controller 32 can activate the motor 26 in response. It is generally contemplated that the activation rod 54 of the first container 14 can extend to the first distance D₁, and the activation rod 54 can extend to the second distance D₂. The first and second distances D₁, D₂ can be detected by the analog magnetic sensor 30 to both activate the motor 26 and blade assembly 50 and identify the respective container 12. The controller 32 can prompt the respective protocol 114, 116 based on the identification of the respective container 12 by the analog magnetic sensor 30.

Referring still to FIGS. 4-8, the first magnet 20 is coupled to the base 18 of the first container 14 at the first distance D₁ relative to the analog magnetic sensor 30, and the second magnet 22 is coupled to the base 18 of the second container 16 at the second distance D₂. The first and second distances D₁, D₂ may include a variety of distances that may distinguish the first and second containers 14, 16. It is also contemplated that the interchangeable containers 12 may include more than two containers, each including magnets at varying distances. For purposes of this disclosure, the first and second containers 14, 16 are described with respect to the detection of the first and second magnets 20, 22 by the analog magnetic sensor 30 within the container detection system 100. The analog magnetic sensor 30 is configured to detect the first and second magnets 20, 22 at the first and second distances D₁, D₂. By way of example, not limitation, the first and second magnets 20, 22 may be coupled to the upper portion 48 of the base 18 of the first and second containers 14, 16, respectively. It is generally contemplated that the first distance D₁ is less than the second distance D₂, such that the first magnet 20 is positioned closer to the analog magnetic sensor 30 as compared to the second magnet 22.

The relative distances D₁, D₂ of the first and second magnets 20, 22 may be influenced by the relative length of the sidewalls 46 of the base 18. For example, the base 18 of the second container 16 may include sidewalls 46 that extend a greater length than the sidewalls 46 of the base 18 of the first container 14. Additionally or alternatively, the first and second magnets 20, 22 may be respectively positioned on a projection that may extend from the upper portion 48 of the surface to control and vary the distances D₁, D₂ between the first and second magnets 20, 22 and the analog magnetic sensor 30. As mentioned above, the analog magnetic sensor 30 is configured to detect the relative distances D₁, D₂ and send a corresponding signal to the controller 32. Stated differently, the analog magnetic sensor 30 can detect the interchangeable container 12 positioned on the housing 24 based on the distance D₁, D₂ of the detected magnet 20, 22.

For example, the user may position the first container 14 on the attachment portion 28 of the housing 24, and the analog magnetic sensor 30 can detect the first container 14 based on the distance D₁ of the first magnet 20 from the analog magnetic sensor 30. The analog magnetic sensor 30 can then send a signal to the controller 32, and the controller 32 may initiate the respective container protocol 112, such as the blender protocol 114. Additionally or alternatively, the user can remove the first container 14 from the housing 24 and instead position the second container 16 on the housing 24. The analog magnetic sensor 30 can then detect the second distance D₂ of the second magnet 22 and send a corresponding signal to the controller 32. By way of example, not limitation, the first distance D₁ of the first magnet 20 may be 5-millimeters from the analog magnetic sensor 30, and the second distance D₂ of the second magnet 22 may be 10-millimeters from the analog magnetic sensor 30. If the user interchanges the first and second containers 14, 16, then the controller 32 can then alter the container protocol 112 displayed on the user interface 80 to correspond with the newly positioned second container 16. It is generally contemplated that the blender protocol 114 may be activated when the first container 14 is detected by the analog magnetic sensor 30, and the food processor protocol 116 may be activated when the second container 16 is detected by the analog magnetic sensor 30.

With further reference to FIGS. 4-8, while the container protocols 90 are displayed on the user interface 80 (FIG. 3) of the countertop appliance 10, it is also contemplated that the respective container protocol 112 can be displayed on the remote user device 118 for operation by the user. The controller 32 is communicatively coupled with the remote user device 118 via the wireless communication interface 110. The remote user device 118 can receive data and updates from the controller 32 regarding the countertop appliance 10. For example, the controller 32 can send a notification to the remote user device 118 indicating which container protocol 112 will be initiated based on the container 12 detected.

If the first container 14 is detected, then the controller 32 may communicate the blender protocol 114 with the remote user device 118, and the user may make further selections. It is generally contemplated that the blender protocol 114 is configured with blending functions, such as blending, mixing, ice crushing, liquefying, puree, pulse, and other practicable blending functions. It is also contemplated that if the second container 16 is detected, the user may be presented with the food processor protocol 116, which can include food processing functions, such as chopping, grating, mincing, slicing, and pureeing.

Referring now to FIGS. 4-11, the first and second magnets 20, 22 each have a polarity defined by North and South. It is generally contemplated that the first magnet 20 is configured with the North polarity directed upward, and the second magnet 22 is configured with the South polarity directed upward. Alternatively, the first magnet 20 may have the South polarity directed upward, and the second magnet 22 may have the North polarity directed upward. The directional orientation of the poles influences the detection by the analog magnetic sensor 30. For example, the analog magnetic sensor 30 detects positive values when the North polarity is directed upward and detects negative values when the South polarity is directed upward. The positive and negative values detected by the analog magnetic sensor 30 can be utilized to further differentiate the interchangeable containers 12. The detection of the first and second magnets 20, 22 based on distance D₁, D₂ and/or polarity advantageously provides greater diversity in the number of interchangeable containers 12 that may be utilized with the countertop appliance 10.

The analog magnetic sensor 30, in addition to detecting the distances D₁, D₂ of the first and second magnets 20, 22, also detects the relative polarity of the first and second magnets 20, 22. The detection of polarity can further identify the first and second containers 14, 16, as both the distances D₁, D₂ and polarities of the first and second magnets 20, 22 are stored within the memory storage 102 of the controller 32. The stored distances D₁, D₂, along with the analog magnetic sensor 30 and the first and second magnets 20, 22, make up the container detection system 100. The container detection system 100 is configured to identify the detected container 12 and present the corresponding container protocol 112 to the user. The detection of polarity can serve as a verification check that the correct interchangeable container 12 is being detected by the analog magnetic sensor 30. Additionally or alternatively, the polarities, in combination with the distances D₁, D₂, advantageously provide a wider range of potential interchangeable containers 12 that may be used with the universal and/or common housing 24.

Referring again to FIGS. 1-11, the countertop appliance 10 can advantageously utilize the analog magnetic sensor 30 and the first and second magnets 20, 22 to identify the interchangeable containers 12. The use of the analog magnetic sensor 30 specifically can detect both the varied distances D₁, D₂ and polarities of the first and second magnets 20, 22. The various utilizations of the analog magnetic sensor 30 and the first and second magnets 20, 22 maximizes the number of interchangeable containers 12 capable of coupling with and being utilized with the housing 24 of the countertop appliance 10. The housing 24 is advantageously capable of use with a variety of interchangeable containers 12, such that the housing 24 is considered to be a common and/or universal housing 24.

The invention disclosed herein is further summarized in the following paragraphs and is further characterized by combinations of any and all of the various aspects described therein.

According to one aspect of the present disclosure, a countertop appliance comprises interchangeable containers including a first container and a second container each having a base. The first container includes a first magnet coupled to the base of the first container at a first distance and the second container includes a second magnet coupled to the base of the second container at a second distance. A housing includes a motor and an attachment portion. The interchangeable containers are selectively and operably coupled to the attachment portion of the housing. An analog magnetic sensor is disposed proximate the attachment portion of the housing. The analog magnetic sensor is configured to detect the first magnet at the first distance and the second magnet at the second distance. A controller is communicatively coupled with the analog magnetic sensor. The controller is configured to identify one of the interchangeable containers based on the detected distance of one of the first magnet and the second magnet.

According to another aspect, an analog magnetic sensor is configured to detect a polarity of each of the first magnet and the second magnet.

According to another aspect, a controller is configured to identify one of the first container and the second container based on the detected polarity by the analog magnetic sensor.

According to another aspect, a controller is configured to prompt a container protocol for the identified interchangeable container.

According to another aspect, a controller is further configured to repeatedly detect the first and second magnets to determine whether the one of the interchangeable containers is stationary.

According to another aspect, a first container includes a lid and a body that defines a channel, and further comprises an activation rod disposed within the channel and includes the first magnet, the activation rod being translated via the lid.

According to another aspect, a controller is further configured to identify when the lid is in a closed position based on a change in position of the first magnet detected by the analog magnetic sensor.

According to another aspect, a controller is further configured to activate the motor in response to the lid being in the closed position.

According to another aspect, each interchangeable container includes sidewalls extending from an upper portion of the base, the sidewalls of the first container extending from the upper portion by a first length and the sidewalls of the second container extending from the upper portion by a second length greater than the first length.

According to another aspect, a first and second magnets are positioned on the upper portion.

According to another aspect, a first and second magnets are configured to be positioned directly over the analog magnetic sensor.

According to another aspect, a analog magnetic sensor is a Hall effect sensor.

According to another aspect, a Hall effect sensor is configured to detect a polarity of the first and second magnets, wherein the polarity includes one of a North polarity directed upward and a South polarity directed upward.

According to another aspect, a controller is further configured to determine a verification check of an identity of the interchangeable containers based on the polarity.

According to another aspect, a Hall effect sensor is configured to communicate positive and negative values to the controller based on the polarity of the first and second magnets, and wherein the controller is further configured to determine the identity of the interchangeable containers based further on the positive and negative values.

According to another aspect of the present disclosure, a countertop appliance includes interchangeable containers including a first container and a second container each including a lid and a body that defines a channel. An activation rod is disposed within the channel and includes a magnet. The activation rod is translated via the lid of the interchangeable containers. An analog magnetic sensor is disposed proximate the magnet of the activation rod. The analog magnetic sensor is configured to detect a distance of the magnet relative to the analog magnetic sensor. A controller is communicatively coupled with the analog magnetic sensor. The controller is configured to identify when the lid is in a closed position based on the distance of the magnet detected by the analog magnetic sensor.

According to another aspect, an analog magnetic sensor is configured to detect a polarity of magnet.

According to another aspect, a controller is further configured to identify one of the first container and the second container based on the detected polarity.

According to another aspect, a controller is configured to prompt a container protocol for the identified interchangeable container.

According to still another aspect of the present disclosure, a countertop appliance includes interchangeable containers including a first container and a second container each having a base. The first container includes a first magnet coupled to the base of the first container at a first distance and the second container includes a second magnet coupled to the base of the second container at a second distance. A housing includes a motor and an attachment portion. The interchangeable containers are selectively and operably coupled to the attachment portion of the housing. An analog magnetic sensor is disposed proximate the attachment portion of the housing and is configured to detect a polarity of the first magnet at the first distance and a polarity of the second magnet at the second distance. A controller is communicatively coupled with the analog magnetic sensor configured to identify one of the interchangeable containers based on the detected polarity and the detected distance of one of the first magnet and the second magnet.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A countertop appliance (10), comprising:
interchangeable containers (12) including a first container (14) and a second container (16) each having a base (18), the first container (14) including a first magnet (20) coupled to the base (18) of the first container (14) at a first distance (Di) and the second container (16) including a second magnet (22) coupled to the base (18) of the second container (16) at a second distance (D₂);
a housing (24) including a motor (26) and an attachment portion (28), wherein the interchangeable containers (12) are selectively and operably coupled to the attachment portion (28) of the housing (24);
an analog magnetic sensor (30) disposed proximate the attachment portion (28) of the housing (24), the analog magnetic sensor (30) being configured to detect the first magnet (20) at the first distance (Di) and the second magnet (22) at the second distance (D₂) when respective first container (14) or second container (16) is coupled to the attachment portion (28) of the housing (24); and
a controller (32) communicatively coupled with the analog magnetic sensor (30), the controller (32) being configured to identify one of the interchangeable containers (12) based on the detected distance of one of the first magnet (20) and the second magnet (22).

2. The countertop appliance (10) of claim 1, wherein the analog magnetic sensor (30) is configured to detect a polarity of each of the first magnet (20) and the second magnet (22).

3. The countertop appliance (10) of claim 2, wherein the controller (32) is configured to identify one of the first container (14) and the second container (16) based on the detected polarity by the analog magnetic sensor (30).

4. The countertop appliance (10) of any one of claims 1-3, wherein the controller (32) is configured to prompt a container protocol for the identified interchangeable container (12).

5. The countertop appliance (10) of any of of claims 1-4, wherein the controller (32) is further configured to repeatedly detect the first and second magnets (20), (22) to determine whether the one of the interchangeable containers (12) is stationary.

6. The countertop appliance (10) of claims 1-5, wherein the first container (14) includes a lid (44) and a body (40) that defines a channel (52), and further comprising:
an activation rod (54) disposed within the channel (52) and includes the first magnet (20), the activation rod (54) being translated via the lid (44).

7. The countertop appliance (10) of claim 6, wherein the controller (32) is further configured to identify when the lid (44) is in a closed position based on a change in position of the first magnet (20) detected by the analog magnetic sensor (30).

8. The countertop appliance (10) of claim 7, wherein the controller (32) is further configured to activate the motor (26) in response to the lid (44) being in the closed position.

9. The countertop appliance (10) of any one of claims 1-8, wherein each interchangeable container (12) includes sidewalls (46) extending from an upper portion (48) of the base (18), the sidewalls (46) of the first container (14) extending from the upper portion (48) by a first length and the sidewalls (46) of the second container (16) extending from the upper portion (48) by a second length greater than the first length.

10. The countertop appliance (10) of claim 9, wherein the first and second magnets (20), (22) are positioned on the upper portion (48).

11. The countertop appliance (10) of any one of claims 1-10, wherein the first and second magnets (20), (22) are configured to be positioned directly over the analog magnetic sensor (30) when respective first container (14) or second container (16) is coupled to the attachment portion (28) of the housing (24).

12. The countertop appliance (10) of any one of claims 1-11, wherein the analog magnetic sensor (30) is a Hall effect sensor.

13. The countertop appliance (10) of claim 12, wherein the Hall effect sensor is configured to detect a polarity of the first and second magnets (20), (22), wherein the polarity includes one of a North polarity directed upward and a South polarity directed upward.

14. The countertop appliance (10) of claim 13, wherein the controller (32) is further configured to:
determine a verification check of an identity of the interchangeable containers (12) based on the polarity.

15. The countertop appliance (10) of claim 14, wherein the Hall effect sensor is configured to communicate positive and negative values to the controller (32) based on the polarity of the first and second magnets (20), (22), and wherein the controller (32) is further configured to determine the identity of the interchangeable containers (12) based further on the positive and negative values.
